# EUROPEAN PATENT APPLICATION

(11) **EP 4 837 884 A1**
(43) Date of publication of application: **11.11.2026**
(21) Application number: 25227855.1
(22) Date of filing: 31.12.2025
(51) Int. Cl.: C01G 53/82, H01M 4/525

(54) **HIGH-NICKEL TERNARY PRECURSOR, AND PREPARATION METHOD AND APPLICATION THEREOF**

(30) Priority: 06.05.2025 CN 202510578066
(71) Applicant: HUAYOU NEW ENERGY TECHNOLOGY (QUZHOU) CO., LTD., Quzhou, Zhejiang 324000 (CN); ZHEJIANG HUAYOU COBALT CO., LTD., Jiaxing, Zhejiang 314000 (CN)
(72) Inventor: XU, Wei, Jiaxing,, Zhejiang 314000 (CN); ZHANG, Kejun, Jiaxing, Zhejiang 314000 (CN); OUYANG, Yi, Jiaxing, Zhejiang 314000 (CN); LIU, Yang, Jiaxing, Zhejiang 314000 (CN); ZHANG, Hao, Jiaxing, Zhejiang 314000 (CN); SHEN, Zhenlei, Jiaxing, Zhejiang 314000 (CN); HUO, Guangpeng, Jiaxing, Zhejiang 314000 (CN)
(74) Representative: HGF

(57) **Abstract**

Provided is a high-nickel ternary precursor, and a preparation method and application thereof. The high-nickel ternary precursor is a secondary particle formed by crystal whiskers. The secondary particle includes a core, an intermediate layer, and an outer layer, which are sequentially arranged in a direction from a center to an outer surface; and an average distance between the crystal whiskers in the core, in the intermediate layer and in the outer layer is a, b, and c, where a, b, and c meet the following conditions: b is less than a, and b is less than c. The high-nickel ternary precursor has a crack-free surface. When a high-nickel ternary layered material is prepared using the high-nickel ternary precursor as a raw material and applied to a lithium-ion battery, the high-nickel ternary layered material has excellent structural stability, and thus the lithium-ion battery has excellent rating performance and cycling stability.

## Description

### Technical Field

The present invention relates to the technical field of positive electrode materials of lithium-ion batteries, and specifically to a high-nickel ternary precursor, and a preparation method and an application thereof.

### Background

High-nickel ternary layered material demonstrates significant application potential in vehicle power batteries due to its high specific capacities, low costs, and good safety. The high-nickel ternary layered material is prepared by using a high-nickel ternary precursor as a raw material. A collaborative conductive network may be formed by compounding the high-nickel ternary precursor with a large particle size and a pure high-nickel single-crystal material with a small particle size, and a tap density and an energy density are increased at the same time. However, when the high-nickel ternary precursor with the large particle size is prepared, for example, a high-nickel ternary precursor with D₅₀ > 10 µm is prepared, precursor cracking may easily occur in the high-nickel ternary precursor under conditions of a high rotary speed and a high solid content, and the mechanical stress involved in subsequent lithium mixing processes further increases the risk of fracture in the high-nickel ternary precursor. This structural damage not only damages material stability, but also accelerates electrolyte consumption and positive electrode structural collapse, ultimately leading to capacity degradation. In order to avoid generation of cracks, conventional methods are to reduce mixing intensity or shorten synthesis time. However, reducing mixing intensity may result in poor degree of sphericity, incomplete reactions, or adhesion of the high-nickel ternary precursor. Shortening synthesis time lowers the tap density of the high-nickel ternary precursor and decreases production capacity, not facilitating industrial production.

### Summary

Based on this, in view of the above problems, it is necessary to provide a high-nickel ternary precursor, and a preparation method and an application thereof. The high-nickel ternary precursor has crystal whiskers internally arranged in sequence and a crack-free surface. When a high-nickel ternary layered material is prepared using the high-nickel ternary precursor as a raw material and applied to a lithium-ion battery, the high-nickel ternary layered material has excellent structural stability, and thus the lithium-ion battery has excellent rating performance and cycling stability.

The present invention discloses a high-nickel ternary precursor. The high-nickel ternary precursor is a secondary particle formed by crystal whiskers. The secondary particle includes a core, an intermediate layer, and an outer layer, which are sequentially arranged in a direction from a center to an outer surface; and an average distance between the crystal whiskers in the core is a, an average distance between the crystal whiskers in the intermediate layer is b, and an average distance between the crystal whiskers in the outer layer is c, where a, b, and c meet the following conditions: b is less than a, and b is less than c.

In an embodiment, a ratio of a radius of the core to a thickness of the intermediate layer is 1:1.33-1:2.66.

In an embodiment, a ratio of the radius of the core to a thickness of the outer layer is 1:2.33-1:4.33.

In an embodiment, 110 nm ≤ a ≤ 130 nm. In an embodiment, 80 nm ≤ b ≤ 115 nm. In an embodiment, 90 nm≤c≤140 nm. In an embodiment, 10 nm≤a-b≤42 nm. In an embodiment, 10 nm ≤c-b≤40 nm.

In an embodiment, the D₅₀ of the high-nickel ternary precursor is 15 µm-20 µm.

In an embodiment, a radius of the core is 1.5 µm-3.5 µm.

In an embodiment, a thickness of the intermediate layer is 4 µm-8 µm.

In an embodiment, a thickness of the outer layer is 7 µm-13 µm.

In an embodiment, a half-peak width of a (001) crystal plane of the high-nickel ternary precursor is less than or equal to 0.5.

In an embodiment, a molecular formula of the high-nickel ternary precursor is NiₓCo_{y}Mn_{z}M_{w}(OH)₂, where M represents a doped metal element, 0.8 ≤ x < 0.95, 0.01 < y ≤ 0.1, 0.01 < z ≤ 0.15, w ≤ 0.01, and x+y+z+w=1.

In an embodiment, the high-nickel ternary precursor meets at least one of the following conditions.
(1) The high-nickel ternary precursor is spherical in shape, and a degree of sphericity of the high-nickel ternary precursor is greater than or equal to 98%.
(2) A tap density of the high-nickel ternary precursor is 1.85 g/cm³-2.05 g/cm³.
(3) A specific surface area of the high-nickel ternary precursor is 8.0 m²/g-18.0 m²/g.

In the high-nickel ternary precursor provided in the present invention, crystal whiskers are directionally arranged in sequence in the high-nickel ternary precursor, such that the internal stress of the high-nickel ternary precursor can be well reduced to avoid cracks in the high-nickel ternary precursor due to an increased particle size, and a lithium-ion transport distance may also be shortened to reduce resistance to lithium ion transport across grain boundaries. Moreover, the high-nickel ternary precursor shows a structure characterized by a loose and porous core, a dense intermediate layer, and a loose and porous outer layer. The loose and porous core and outer layer can cause the high-nickel ternary precursor to be able to be in better contact with active substances such as lithium ions, while the high density of the intermediate layer not only can well support material transport between the core and the outer layer, but also may increase the tap density and enhance the particle strength of the high-nickel ternary precursor, thereby further improving the transport efficiency of the lithium ions, and avoiding generation of cracks on a surface of the high-nickel ternary precursor. When a high-nickel ternary layered material is prepared by using the high-nickel ternary precursor as a raw material and applied to lithium-ion batteries, the high-nickel ternary layered material has excellent structural stability and is less prone to expansion and contraction due to anisotropy during cycling. Therefore, the internal stress of the lithium-ion battery during charging and discharging is reduced, and particle crushing and pulverization problems caused by electronic short circuit and electrolyte penetration can also be significantly relieved. Finally, the lithium-ion battery shows excellent rating performance and cycling stability.

The present invention further discloses a method for preparing the high-nickel ternary precursor described above. The preparation method includes the following steps.

A metal salt solution, a complexing agent solution, and a precipitation agent solution are added to a first base solution to perform a first co-precipitation reaction, so as to obtain a crystal nucleus, where the first base solution includes a complexing agent and a precipitation agent.

The crystal nucleus, the complexing agent solution, the precipitation agent solution, and a solvent are mixed to obtain a second base solution.

The metal salt solution, the complexing agent solution, and the precipitation agent solution are added to the second base solution to perform a second co-precipitation reaction, so as to obtain a pre-product, and aftertreatment is performed on the pre-product to obtain a high-nickel ternary precursor, where in the step of performing the second co-precipitation reaction, the pH of the second base solution is X, an ammonia value of the second base solution is Y, and X and Y meet the following conditions: Y=k×X-b, k is 4.7-5.3, and b is 49-50.

In an embodiment, X=10-11, and Y=1.5 g/L-6.5 g/L; preferably, X=10.00-10.80, and Y=1.5 g/L-5.0 g/L.

In an embodiment, the step of adding the metal salt solution, the complexing agent solution, and the precipitation agent solution to the first base solution to perform the first co-precipitation reaction meets at least one of the following conditions.
(1) The metal salt solution includes a nickel salt, a cobalt salt, and a manganese salt. (2) The precipitation agent solution includes at least one of NaOH, KOH, Na₂CO₃, or NaHCO₃. (3) The complexing agent solution includes at least one of ammonia water, ammonia carbonate, or ammonium bicarbonate. (4) A flow rate of the metal salt solution is 10 L/h-35 L/h, and/or an ammonia value of the first base solution is 1.7-5.0 g/L, and/or an ammonia value of the first base solution is 2.0-5.0 g/L, and the pH of the first base solution is 11.10-11.90. (5) A concentration of the metal salt solution is 60-150 g/L, a mass concentration of the precipitation agent is 20%-35%, and a mass concentration of the complexing agent is 5%-15%. (6) A temperature for the first co-precipitation reaction is 50 °C -60 °C, and a time for the first co-precipitation reaction is 30 h-40 h. (7) The D₅₀ of the crystal nucleus is 4 µm-6 µm. (8) the precipitation agent solution is selected from a sodium hydroxide aqueous solution with a mass fraction of 20%-35%. (9) the complexing agent solution is selected from an ammonia water solution with a mass fraction of 5%-15%. (10) the metal salt solution includes a nickel salt, a cobalt salt, and a manganese salt; the nickel salt is selected from nickel carbonate, nickel nitrate, nickel sulfate, or nickel halide, the cobalt salt is selected from cobalt carbonate, cobalt nitrate, cobalt sulfate, or cobalt halide, and the manganese salt is selected from manganese carbonate, manganese nitrate, manganese sulfate, or manganese halide.

In an embodiment, the second base solution meets at least one of the following conditions.
(1) An addition amount of the crystal nucleus in the second base solution is 10 kg-20 kg, an ammonia value of the second base solution is 1.5 g/L-5.0 g/L, and a pH of the second base solution is 10.00-10.80.
(2) The precipitation agent solution includes at least one of NaOH, KOH, Na₂CO₃, or NaHCO₃.
(3) The complexing agent solution includes at least one of ammonia water, ammonia carbonate, or ammonium bicarbonate.

In an embodiment, the step of adding the metal salt solution, the complexing agent solution, and the precipitation agent solution to the second base solution to perform the second co-precipitation reaction meets at least one of the following conditions.
(1) The metal salt solution includes a nickel salt, a cobalt salt, and a manganese salt.
(2) The precipitation agent solution includes at least one of NaOH, KOH, Na₂CO₃, or NaHCO₃.
(3) The complexing agent solution includes at least one of ammonia water, ammonia carbonate, or ammonium bicarbonate.
(4) A flow rate of the metal salt solution is 15 L/h-40 L/h, an ammonia value of the second base solution is 1.5 g/L-5.0 g/L, and a pH of the second base solution is 10.00-10.80.
(5) A temperature for the second co-precipitation reaction is 50 °C -70 °C, and a time for the second co-precipitation reaction is 40 h-70 h.

In the method for preparing the high-nickel ternary precursor in the present invention, first, a loose and porous crystal nucleus in which crystal whiskers are arranged in sequence is prepared by controlling the pH and ammonia value of the first base solution, and then the pH and ammonia value in the second co-precipitation reaction meet certain linear conditions to control a nucleation rate and a grow speed, such that the crystal whiskers grow in a radial direction, the ordered arrangement of the crystal whiskers is realized, and a size of the crystal whiskers is increased to reduce structural stress inside a crystal, thereby inhibiting cracking, and achieving simple preparation of the high-nickel ternary precursor provided in the present invention. Furthermore, the preparation method is simple in process, and a pulp washing is omitted, such that a production capacity can be greatly improved, alkali consumption and water consumption of subsequent washing processes may also be reduced, and costs are reduced, thereby realizing cost reduction and efficiency improvement.

The present invention further discloses a high-nickel ternary layered material, the raw material of which includes the high-nickel ternary precursor described above.

A method for preparing the high-nickel ternary layered material described above includes the following step.

The high-nickel ternary precursor described above is provided, and the high-nickel ternary precursor is mixed with a lithium source in proportion to perform solid-phase sintering, so as to obtain the high-nickel ternary layered material.

A positive electrode plate including the high-nickel ternary layered material described above is provided.

A lithium-ion battery including the positive electrode plate described above is provided.

The high-nickel ternary layered material provided in the present invention uses the above high-nickel ternary precursor as the raw material. Since the raw material which is high-nickel ternary precursor has crystal whiskers internally arranged in sequence and a crack-free surface, the high-nickel ternary layered material has excellent structural stability and is less prone to expansion and contraction due to anisotropy during cycling. When the high-nickel ternary layered material is applied to a lithium-ion battery, the internal stress of the lithium-ion battery during charging and discharging is reduced, and particle crushing and pulverization problems caused by electronic short circuit and electrolyte penetration can also be significantly relieved. Finally, the lithium-ion battery shows excellent rating performance and cycling stability.

### Brief Description of the Drawings

In order to illustrate the technical solutions in the examples of the present invention or technical solutions in the prior art more clearly, the drawings used in the technical description of the examples will be briefly described below. It is apparent that the drawings in the following descriptions are merely some examples of the present invention. Other drawings can be obtained from those skilled in the art according to these drawings without any creative work.
FIG. 1 shows a schematic structural diagram of a high-nickel ternary precursor according to the present invention.
FIG. 2 shows a scanning electron microscope diagram of a high-nickel ternary precursor according to Example 1.
FIG. 3 shows a scanning electron microscope diagram of a high-nickel ternary precursor according to Example 2.
FIG. 4 shows a scanning electron microscope diagram of a high-nickel ternary precursor according to Example 3.
FIG. 5 shows a scanning electron microscope diagram of a high-nickel ternary precursor according to Example 4.
FIG. 6 shows a scanning electron microscope diagram of a high-nickel ternary precursor according to Comparative example 1.
FIG. 7 shows a scanning electron microscope diagram of a high-nickel ternary precursor according to Comparative example 2.

In the drawings, 10. Core; 20. Intermediate layer; 30. Outer layer.

### Detailed Description of the Embodiments

For ease of understanding of the present invention, the present invention is described below in more detail. However, it is to be understood that, the present invention may be implemented in many different forms, and is not limited to the embodiments described herein. Rather, the purpose of providing these embodiments or examples is to understand the invention of the present invention more thoroughly and completely.

Unless otherwise defined, all technical and scientific terms in the specification have the same meaning as those skilled in the art usually understand. Terms used in the specification of the present invention are merely for description of the embodiments or examples, and are not intended to limit the present invention.

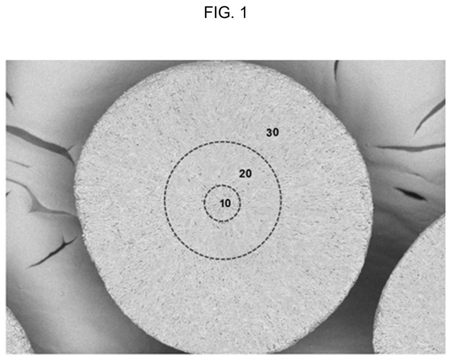

In a first aspect of the present invention, a high-nickel ternary precursor is provided. As shown in FIG. 1 (the magnification is 5000x), the high-nickel ternary precursor is a secondary particle formed by crystal whiskers. The secondary particle includes a core, an intermediate layer, and an outer layer, which are sequentially arranged in a direction from a center to an outer surface; and an average distance between the crystal whiskers in the core is a, an average distance between the crystal whiskers in the intermediate layer is b, and an average distance between the crystal whiskers in the outer layer is c, where a, b, and c meet the following conditions: b is less than a, and b is less than c.

In an embodiment, a molecular formula of the high-nickel ternary precursor is NiₓCo_{y}Mn_{z}M_{w}(OH)₂, where M represents a doped metal element, 0.8 ≤ x < 0.95, 0.01 < y ≤ 0.1, 0.01 < z ≤ 0.1, w ≤ 0.01, and x+y+z+w=1, including but not limited to, M is selected from Al, Zr, or Ti, x=0.8, 0.81, 0.82, 0.83, 0.84, 0.85, 0.86, 0.87, 0.88, 0.89, 0.90, 0.91, 0.92, 0.93, or 0.94, y=0.01, 0.02, 0.03, 0.04, 0.05, 0.06, 0.07, 0.08, 0.09, or 0.1, z=0.01, 0.02, 0.03, 0.04, 0.05, 0.06, 0.07, 0.08, 0.09, or 0.1, and w=0.01, 0.009, 0.008, 0.007, 0.006, 0.005, 0.004, 0.003, 0.002, or 0.001.

In the high-nickel ternary precursor provided in the present invention, crystal whiskers are directionally arranged in sequence in the high-nickel ternary precursor, such that the internal stress of the high-nickel ternary precursor can be well reduced to avoid cracks in the high-nickel ternary precursor due to an increased particle size, and a lithium-ion transport distance may also be shortened to reduce resistance to lithium ion transport across grain boundaries.

Moreover, the high-nickel ternary precursor shows a structure characterized by a loose and porous core, a dense intermediate layer, and a loose and porous outer layer. The loose and porous core and outer layer can cause the high-nickel ternary precursor to be able to be in better contact with active substances such as lithium ions, while the high density of the intermediate layer not only can well support material transport between the core and the outer layer, but also may increase the tap density and enhance the particle strength of the high-nickel ternary precursor, thereby further improving the transport efficiency of the lithium ions, and avoiding generation of cracks on a surface of the high-nickel ternary precursor.

In an embodiment, a ratio of a radius of the core to a thickness of the intermediate layer is 1:1.33-1:2.66, including but not limited to, 1:1.33, 1:1.43, 1:1.53, 1:1.63, 1:1.73, 1:1.83, 1:1.93, 1:2.03, 1:2.13, 1:2.23, 1:2.33, 1:2.43, 1:2.53, 1:2.63, or 1:2.66. A ratio of the radius of the core to a thickness of the outer layer is 1:2.33-1:4.33, including but not limited to, 1:2.33, 1:2.53, 1:2.73, 1:2.93, 1:3.13, 1:3.33, 1:3.53, 1:3.73, 1:3.93, 1:4.13, or 1:4.33. Therefore, particle strength may be effectively improved, thereby reducing cracking.

In an embodiment, 110 nm≤a≤130 nm, including but not limited to, 110 nm, 112 nm, 115 nm, 118 nm, 120 nm, 122 nm, 125 nm, 128 nm, or 130 nm. In an embodiment, 80 nm≤b≤115 nm, including but not limited to, 80 nm, 85 nm, 90 nm, 95 nm, 100 nm, 105 nm, 110 nm, or 115 nm. In an embodiment, 90 nm≤c≤140 nm, including but not limited to, 90 nm, 100 nm, 110 nm, 120 nm, 130 nm, or 140 nm. In an embodiment, 10 nm≤a-b≤42 nm, including but not limited to, 10 nm, 15 nm, 20 nm, 25 nm, 30 nm, 35 nm, 40 nm, or 42 nm. In an embodiment, 10 nm≤c-b≤40 nm, including but not limited to, 10 nm, 15 nm, 20 nm, 25 nm, 30 nm, 35 nm, or 40 nm.

In an embodiment, the D₅₀ of the high-nickel ternary precursor is 15 µm-20 µm. It is to be noted that, the D₅₀ is a characteristic value determined by a cumulative particle size distribution function, that is, a particle size parameter corresponding to a cumulative particle size distribution percentage of a sample reaching 50%. The parameter characterizes a middle distribution position of a particle size of powder, where particles larger than D₅₀ accounts for 50%, and particles smaller than D₅₀ also accounts for 50%. As an important characterization indicator of a powder material, the D₅₀ is commonly used to quantify the average particle size characteristics of the material.

In an embodiment, the radius of the core is 1.5 µm-3.5 µm, including but not limited to, 1.5 µm, 2.0 µm, 2.5 µm, 3.0 µm, or 3.5 µm.

In an embodiment, the thickness of the intermediate layer is 4 µm-8 µm, including but not limited to, 4 µm, 4.5 µm, 5 µm, 5.5 µm, 6 µm, 6.5 µm, 7 µm, 7.5 µm, or 8 µm.

In an embodiment, the thickness of the outer layer is 7 µm-13 µm, including but not limited to, 7 µm, 7.5 µm, 8 µm, 8.5 µm, 9 µm, 9.5 µm, 10 µm, 10.5 µm, 11 µm, 11.5 µm, 12 µm, 12.5 µm, or 13 µm.

The cracking of the surface of the high-nickel ternary precursor is related to an internal structure of the high-nickel ternary precursor. If the crystal whiskers of the high-nickel ternary precursor grow in a disordered manner, the stress of the internal structure of the high-nickel ternary precursor is significantly increased, reducing particle strength, and thus generating cracks. Since a crystal plane (001) has lower surface energy and growth and stacking are rapidly performed along the (001) crystal plane, it is found in the present invention that whether cracking occurs in the surface of the high-nickel ternary precursor may be evaluated by using a numerical value of a half-peak width of the (001) crystal plane. If the half-peak width of the (001) crystal plane is small, it indicates that a peak width is narrow, the crystal whiskers are well arranged in sequence, cracking in the surface of the high-nickel ternary precursor is less or even does not exist, otherwise, it indicates that the crystal whiskers are poorly arranged in sequence, the particle strength of the high-nickel ternary precursor is poor or has stress or defects, leading to more surface cracks. In an embodiment, the half-peak width of the (001) crystal plane of the high-nickel ternary precursor is less than or equal to 0.5, including but not limited to, 0.5, 0.4, 0.3, 0.2, 0.1, 0.09, 0.08, 0.07, 0.06, 0.05, 0.04, 0.03, 0.02, or 0.01.

In an embodiment, the high-nickel ternary precursor is spherical in shape, such that when the high-nickel ternary precursor and a lithium source are mixed and subjected to solid-phase sintering, lithium can permeate into the high-nickel ternary precursor more uniformly. Preferably, the degree of sphericity of the high-nickel ternary precursor is greater than or equal to 98%.

In an embodiment, a tap density of the high-nickel ternary precursor is 1.85 g/cm³-2.05 g/cm³, including but not limited to, 1.85 g/cm³, 1.90 g/cm³, 1.95 g/cm³, 2.00 g/cm³, or 2.05 g/cm³.

In an embodiment, a specific surface area of the high-nickel ternary precursor is 8.0 m²/g-18.0 m²/g, including but not limited to, 8.0 m²/g, 9.0 m²/g, 10.0 m²/g, 11.0 m²/g, 12.0 m²/g, 13.0 m²/g, 14.0 m²/g, 15.0 m²/g, 16.0 m²/g, 17.0 m²/g, or 18.0 m²/g.

When the high-nickel ternary layered material is prepared by using the high-nickel ternary precursor as the raw material and is applied to the lithium-ion battery, the high-nickel ternary layered material has excellent structural stability and is less prone to expansion and contraction due to anisotropy during cycling. Therefore, the internal stress of the lithium-ion battery during charging and discharging is reduced, and particle crushing and pulverization problems caused by electronic short circuit and electrolyte penetration can also be significantly relieved. Finally, the lithium-ion battery shows excellent rating performance and cycling stability.

In a second aspect of the present invention, a method for preparing the high-nickel ternary precursor described above is provided and includes the following steps.

At S101, a metal salt solution, a complexing agent solution, and a precipitation agent solution are added to a first base solution to perform a first co-precipitation reaction, so as to obtain a crystal nucleus, where the first base solution includes a complexing agent and a precipitation agent.

At S102, the crystal nucleus, the complexing agent solution, the precipitation agent solution, and a solvent are mixed to obtain a second base solution.

At S103, the metal salt solution, the complexing agent solution, and the precipitation agent solution are added to the second base solution to perform a second co-precipitation reaction, so as to obtain a pre-product, and aftertreatment is performed on the pre-product to obtain a high-nickel ternary precursor, where in the step of performing the second co-precipitation reaction, the pH of the second base solution is X, an ammonia value of the second base solution is Y, and X and Y meet the following conditions: Y=k×X-b, k is 4.7-5.3, and b is 49-50.

In the method for preparing the high-nickel ternary precursor in the present invention, the steps work in synergy to realize the simple preparation of the above high-nickel ternary precursor. Furthermore, the preparation method is simple in process, and a pulp washing is omitted, such that a production capacity can be greatly improved, alkali consumption and water consumption of subsequent washing processes may also be reduced, and costs are reduced, thereby realizing cost reduction and efficiency improvement.

In S101, a loose and porous crystal nucleus in which crystal whiskers are arranged in sequence is prepared by controlling the pH and ammonia value of the first base solution. In an embodiment, the crystal nucleus is equivalent to the core, and the D₅₀ of the crystal nucleus is 4 µm-6 µm, including but not limited to, 4 µm, 4.5 µm, 5 µm, 5.5 µm, or 6 µm.

In an embodiment, the precipitation agent solution includes at least one of NaOH, KOH, Na₂CO₃, or NaHCO₃. Preferably, the precipitation agent solution is selected from a sodium hydroxide aqueous solution with a mass fraction of 20%-35%, that is, 240-480 g/L, and the pH of the first base solution is 11.10-11.90, including but not limited to, 11.10, 11.20, 11.30, 11.40, 11.50, 11.60, 11.70, 11.80, or 11.90. Mass concentration= (mass of solute / mass of solution)*100%.

In an embodiment, the complexing agent solution includes at least one of ammonia water, ammonia carbonate, or ammonium bicarbonate. Preferably, the complexing agent solution is selected from an ammonia water solution with a mass fraction of 5%-15%, and an ammonia value of the second base solution is 1.5 g/L-5.0 g/L, including but not limited to, 1.5 g/L, 2.0 g/L, 2.5 g/L, 3.0 g/L, 3.5 g/L, 4.0 g/L, 4.5 g/L, or 5.0 g/L.

In an embodiment, the first base solution is obtained by mixing water, the complexing agent solution, and the precipitation agent solution. In order to prevent reactants from being oxidized by air during synthesis, nitrogen is introduced into the first base solution after mixing to perform replacement, and a temperature of the first base solution is controlled at 50 °C-60 °C, including but not limited to, 50 °C, 52 °C, 54 °C, 56 °C, 58 °C, or 60 °C.

In an embodiment, the metal salt solution includes a nickel salt, a cobalt salt, and a manganese salt, including but not limited to, the nickel salt is selected from nickel carbonate, nickel nitrate, nickel sulfate, or nickel halide, the cobalt salt is selected from cobalt carbonate, cobalt nitrate, cobalt sulfate, or cobalt halide, and the manganese salt is selected from manganese carbonate, manganese nitrate, manganese sulfate, or manganese halide.

In an embodiment, a temperature for the first co-precipitation reaction is 50 °C -60 °C, including but not limited to, 50 °C, 52 °C, 54 °C, 56 °C, 58 °C, or 60 °C; and a time for the first co-precipitation reaction is 30 h-40 h, including but not limited to, 30 h, 32 h, 34 h, 36 h, 38 h, or 40 h.

In S102, the pH and ammonia value of the second base solution meet certain linear conditions to control a nucleation rate and a grow speed of the second co-precipitation reaction in S103, such that the crystal whiskers grow in a radial direction, the ordered arrangement of the crystal whiskers is realized, and a size of the crystal whiskers is increased to reduce structural stress inside a crystal, thereby inhibiting cracking.

Types of the complexing agent solution and the precipitation agent solution in S102 is selected by referring to S101, and the operations may be the same or different, as long as the pH and ammonia value of the second base solution meet the following conditions: Y=k×X-b; k is 4.7-5.3, including but not limited to, 4.7, 4.8, 4.9, 5.0, 5.1, 5.2, or 5.3; and b is 49-50, including but not limited to, 49, 49.5, or 50. Preferably, k=5, and b=49.5, that is, the pH and ammonia value of the second base solution meet the following condition: Y=5X-49.5.

In an embodiment, X=10-11, and Y=1.5 g/L-6.5 g/L; preferably, X=10.00-10.80, and Y=1.5g/L-5.0g/L.

In an embodiment, the solvent is selected from water.

In an embodiment, the second base solution is obtained by mixing the solvent, the crystal nucleus, the complexing agent solution, and the precipitation agent solution. In order to prevent reactants from being oxidized by air during synthesis, nitrogen is introduced into the second base solution after mixing to perform replacement, and a temperature of the second base solution is controlled at 50 °C-70 °C, including but not limited to, 50 °C, 55 °C, 60 °C, 65 °C, or 70 °C.

In an embodiment, an addition amount of the crystal nucleus in the second base solution is 10 kg-20 kg, and an ammonia value of the second base solution is 1.5 g/L-5.0 g/L, including but not limited to, 1.5 g/L, 2.0 g/L, 2.5 g/L, 3.0 g/L, 3.5 g/L, 4.0 g/L, 4.5 g/L, or 5.0 g/L. The pH of the second base solution is 10.00-10.80, including but not limited to, 10.00, 10.10, 10.20, 10.30, 10.40, 10.50, 10.60, 10.70, or 10.80.

Types of the metal salt solution, the complexing agent solution, and the precipitation agent solution in S103 is selected by referring to S101, and the operations may be the same or different.

In an embodiment, a temperature for the second co-precipitation reaction is 50 °C -70 °C, including but not limited to, 50 °C, 55 °C, 60 °C, 65 °C, or 70 °C; and a time for the second co-precipitation reaction is 40 h-70 h, including but not limited to, 40 h, 45 h, 50 h, 55 h, 60 h, 65 h, or 70 h.

In an embodiment, the step of performing aftertreatment on the pre-product includes: aging, washing, drying, sieving, and iron removal are performed sequentially on the pre-product.

Since the high-nickel ternary precursor prepared by the preparation method provided in the present invention has no cracks on the surface, an alkaline solution or other repair agents do not need to be added to repair the cracking during aging, and the time for aging is 1 h-3 h.

In an embodiment, the pre-product is washed by sequentially using alkaline water and water, a concentration of the alkaline water is 80 g/L-150 g/L, and the time for washing using the alkaline water is 20 min-50 min.

In an embodiment, sieving is performed by using a 200-400-mesh sieve.

In an embodiment, a drying temperature is 80 °C-120 °C, and a drying time is 8 h-12 h.

In a third aspect of the present invention, a high-nickel ternary layered material prepared using the high-nickel ternary precursor described above is provided.

In a fourth aspect of the present invention, a method for preparing the high-nickel ternary layered material described above is provided and includes the following steps.

At S201, the high-nickel ternary precursor described above is provided.

At S202, the high-nickel ternary precursor is mixed with a lithium source in proportion to perform solid-phase sintering, so as to obtain the high-nickel ternary layered material.

In an embodiment, a sintering temperature is 700 °C-900 °C.

In an embodiment, in the step of performing solid-phase sintering, a sintering time is 8 h-10 h.

In a fifth aspect of the present invention, a positive electrode plate prepared using the high-nickel ternary layered material described above is provided.

In a sixth aspect of the present invention, a lithium-ion battery including the positive electrode plate described above is provided.

The high-nickel ternary layered material provided in the present invention uses the above high-nickel ternary precursor as the raw material. Since the raw material, which is high-nickel ternary precursor has crystal whiskers internally arranged in sequence and a crack-free surface, the high-nickel ternary layered material has excellent structural stability and is less prone to expansion and contraction due to anisotropy during cycling. When the high-nickel ternary layered material is applied to a lithium-ion battery, the internal stress of the lithium-ion battery during charging and discharging is reduced, and particle crushing and pulverization problems caused by electronic short circuit and electrolyte penetration can also be significantly relieved. Finally, the lithium-ion battery shows excellent rating performance and cycling stability.

The high-nickel ternary precursor, and the preparation method and application thereof are further described below by the following specific examples.

### Example 1

A metal salt solution, a complexing agent solution, and a precipitation agent solution were added to a first base solution to perform a first co-precipitation reaction. Nickel sulfate, cobalt sulfate, and manganese sulfate were prepared into a metal salt solution with a concentration of 135 g/L by using pure water, where a molar ratio of nickel, cobalt, and manganese was 83.0:5.0:12.0; a sodium hydroxide solution with a concentration of 320 g/L(25%) was used as a precipitation agent solution; an ammonia water solution with a mass concentration of 8% was used as a complexing agent solution. 100 L of water, 2.0 L of the complexing agent solution, and 0.4 L of the precipitation agent solution were added to a reactor to prepare a first base solution, and the metal salt solution with a flow rate of 30.0 L/h, the complexing agent solution with a flow rate of 2.5 L/h, and the precipitation agent solution with a flow rate of 17.0 L/h were added, while nitrogen was introduced for replacement, stirring is started, a constant temperature of 50 °C was maintained after heating, and a stirring rotary speed of the reactor was set to 400 rpm; the pH of the first base solution in the reactor was regulated to 11.80 using NaOH, and an ammonia value was 1.7 g/L; and a first co-precipitation reaction was performed to prepare a crystal nucleus, and was stopped until the particle size D₅₀ of the crystal nucleus was 5.3 µm, which took approximately 35 h.

12.5kg of the crystal nucleus, 350 L of water, and 9.5 L of the complexing agent solution were added to the reactor to prepare a second base solution, the nitrogen was introduced for replacement, stirring is started, a constant temperature of 55 °C was maintained after heating, and the stirring rotary speed of the reactor was set to 360 rpm; the pH of the second base solution was X, an ammonia value was Y, and the pH value and ammonia value of the second base solution were regulated to cause X and Y to meet: Y=5X-49.5, X was 10.30, and Y was 2.0 g/L.

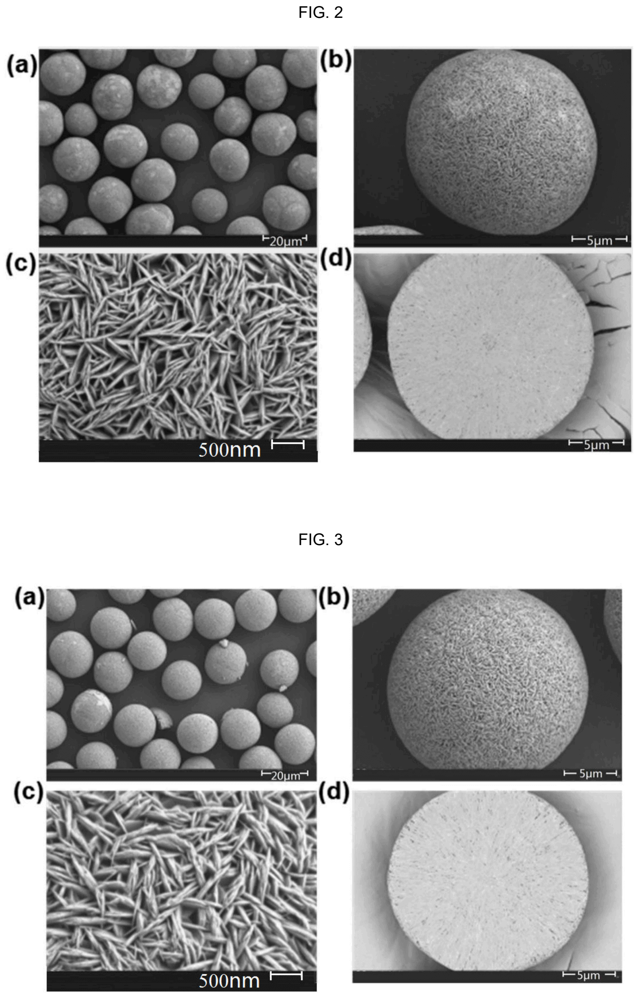

30 L/h of the metal salt solution, 1.6 L/h of the complexing agent solution, 16.8 L/h of the precipitation agent solution, and the nitrogen were introduced into the second base solution; a second co-precipitation reaction was performed and stopped until the particle size D₅₀ of the material was 19.50 µm, which took approximately 63 h at about 55°C, so as to obtain a pre-product; aging, washing, drying, sieving, and iron removal were performed sequentially on the pre-product, so as to obtain a high-nickel ternary precursor; and SEM characterization was performed on the obtained high-nickel ternary precursor. Results were shown in FIG. 2, from FIG. 2, it might be seen that, as shown in (a) and (b), secondary particles were good in degree of sphericity, no cracks were found on an outer surface, and particle size distribution was uniform; as shown in (c), crystal whiskers of primary particles of the high-nickel ternary precursor were arranged in sequence, and there were no fine impurity crystals; and as shown in (d), the high-nickel ternary precursor exhibited a structure where a core was loose and porous, an intermediate layer was dense, and an outer layer was loose and porous.

### Example 2

Example 2 was performed by referring to Example 1. A difference between this example and Example 1 lied in that, the temperature of the second base solution was 63 °C; and SEM characterization was performed on the prepared high-nickel ternary precursor. Results were shown in FIG. 3, from FIG. 3, it might be seen that the crystal whiskers of the primary particles of the high-nickel ternary precursor were arranged in sequence, and there were no fine impurity crystals; and the secondary particles were good in degree of sphericity, the core was loose and porous, the intermediate layer was dense, the outer layer was loose and porous, no cracks were found on the outer surface, and particle size distribution was uniform.

### Example 3

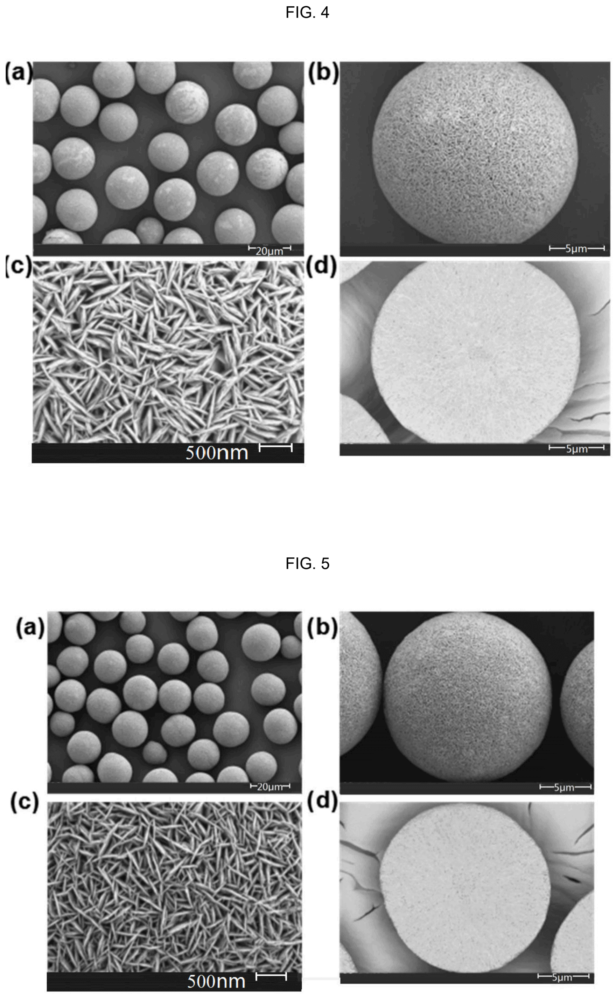

Example 3 was performed by referring to Example 1. A difference between this example and Example 1 lied in that, the pH of the second base solution was X, the ammonia value was Y, and X and Y met: Y=5X-49.5, X was 10.50, and Y was 3.0 g/L. SEM characterization was performed on the prepared high-nickel ternary precursor. Results were shown in FIG. 4, from FIG. 4, it might be seen that the crystal whiskers of the primary particles of the high-nickel ternary precursor were arranged in sequence, and there were no fine impurity crystals; and the secondary particles were good in degree of sphericity, the core was loose and porous, the intermediate layer was dense, the outer layer was loose and porous, no cracks were found on the outer surface, and particle size distribution was uniform.

### Example 4

Example 4 was performed by referring to Example 1. A difference between this example and Example 1 lied in that, the pH of the second base solution was X, the ammonia value was Y, and X and Y met: Y=5X-49.5, X was 10.60, and Y was 3.5 g/L. Furthermore, the reaction was stopped until the particle size D₅₀ during the second co-precipitation reaction was 17.00 µm. SEM characterization was performed on the obtained high-nickel ternary precursor. Results were shown in FIG. 5, from FIG. 5, it might be seen that the crystal whiskers of the primary particles of the high-nickel ternary precursor were arranged in sequence, and there were no fine impurity crystals; and the secondary particles were good in degree of sphericity, the core was loose and porous, the intermediate layer was dense, the outer layer was loose and porous, no cracks were found on the outer surface, and particle size distribution was uniform.

### Example 5

A metal salt solution, a complexing agent solution, and a precipitation agent solution were added to a first base solution to perform a first co-precipitation reaction. Nickel sulfate, cobalt sulfate, and manganese sulfate were prepared into a metal salt solution with a concentration of 135 g/L by using pure water, where a molar ratio of nickel, cobalt, and manganese was 83.0:5.0:12.0; a sodium hydroxide solution with a concentration of 320 g/L was used as a precipitation agent solution; an ammonia water solution with a mass concentration of 8% was used as a complexing agent solution. 100 L of water, 2.0 L of the complexing agent solution, and 0.4 L of the precipitation agent solution were added to a reactor to prepare a first base solution, and the metal salt solution with a flow rate of 25 L/h, the complexing agent solution with a flow rate of 2.4 L/h, and the precipitation agent solution with a flow rate of 14.0 L/h were added, while nitrogen was introduced for replacement, stirring is started, a constant temperature of 55 °C was maintained after heating, and a stirring rotary speed of the reactor was set to 400 rpm; the pH of the first base solution in the reactor was regulated to 11.80 using NaOH, and an ammonia value was 2.0 g/L; and a first co-precipitation reaction was performed to prepare a crystal nucleus, and was stopped until the particle size D₅₀ of the crystal nucleus was 6.0 µm, which took approximately 40 h.

15 kg of the crystal nucleus, 350 L of water, and 9.5 L of the complexing agent solution were added to the reactor to prepare a second base solution, the nitrogen was introduced for replacement, stirring is started, a constant temperature of 55 °C was maintained after heating, and the stirring rotary speed of the reactor was set to 360 rpm; the pH of the second base solution was X, an ammonia value was Y, and the pH value and ammonia value of the second base solution were regulated to cause X and Y to meet: Y=5X-49.5, X was 10.30, and Y was 2.0 g/L.

25 L/h of the metal salt solution, 1.3 L/h of the complexing agent solution, 14.0 L/h of the precipitation agent solution, and the nitrogen were introduced into the second base solution; a second co-precipitation reaction was performed and stopped until the particle size D₅₀ of the material was 17.50 µm, which took approximately 55 h at about 60°C, so as to obtain a pre-product; aging, washing, drying, sieving, and iron removal were performed sequentially on the pre-product, so as to obtain a high-nickel ternary precursor.

### Example 6

A metal salt solution, a complexing agent solution, and a precipitation agent solution were added to a first base solution to perform a first co-precipitation reaction. Nickel sulfate, cobalt sulfate, and manganese sulfate were prepared into a metal salt solution with a concentration of 135 g/L by using pure water, where a molar ratio of nickel, cobalt, and manganese was 83.0:5.0:12.0; a sodium hydroxide solution with a concentration of 320 g/L was used as a precipitation agent solution; an ammonia water solution with a mass concentration of 8% was used as a complexing agent solution. 100 L of water, 2.0 L of the complexing agent solution, and 0.4 L of the precipitation agent solution were added to a reactor to prepare a first base solution, and the metal salt solution with a flow rate of 30.0 L/h, the complexing agent solution with a flow rate of 2.5 L/h, and the precipitation agent solution with a flow rate of 17.0 L/h were added, while nitrogen was introduced for replacement, stirring is started, a constant temperature of 50 °C was maintained after heating, and a stirring rotary speed of the reactor was set to 400 rpm; the pH of the first base solution in the reactor was regulated to 11.30 using NaOH, and an ammonia value was 1.7 g/L; and a first co-precipitation reaction was performed to prepare a crystal nucleus, and was stopped until the particle size D₅₀ of the crystal nucleus was 4.0 µm, which took approximately 30 h.

10 kg of the crystal nucleus, 350 L of water, and 9.5 L of the complexing agent solution were added to the reactor to prepare a second base solution, the nitrogen was introduced for replacement, stirring is started, a constant temperature of 50 °C was maintained after heating, and the stirring rotary speed of the reactor was set to 360 rpm; the pH of the second base solution was X, an ammonia value was Y, and the pH value and ammonia value of the second base solution were regulated to cause X and Y to meet: Y=5X-49.5, X was 10.30, and Y was 2.0 g/L.

15 L/h of the metal salt solution, 1.25 L/h of the complexing agent solution, 8.5 L/h of the precipitation agent solution, and the nitrogen were introduced into the second base solution; a second co-precipitation reaction was performed and stopped until the particle size D₅₀ of the material was 16.00 µm, which took approximately 69 h at about 50°C, so as to obtain a pre-product; aging, washing, drying, sieving, and iron removal were performed sequentially on the pre-product, so as to obtain a high-nickel ternary precursor.

### Example 7

A metal salt solution, a complexing agent solution, and a precipitation agent solution were added to a first base solution to perform a first co-precipitation reaction. Nickel sulfate, cobalt sulfate, and manganese sulfate were prepared into a metal salt solution with a concentration of 135 g/L by using pure water, where a molar ratio of nickel, cobalt, and manganese was 83.0:5.0:12.0; a sodium hydroxide solution with a concentration of 320 g/L was used as a precipitation agent solution; an ammonia water solution with a mass concentration of 8% was used as a complexing agent solution. 100 L of water, 2.0 L of the complexing agent solution, and 0.4 L of the precipitation agent solution were added to a reactor to prepare a first base solution, and the metal salt solution with a flow rate of 15 L/h, the complexing agent solution with a flow rate of 1.25 L/h, and the precipitation agent solution with a flow rate of 8.4 L/h were added, while nitrogen was introduced for replacement, stirring is started, a constant temperature of 60 °C was maintained after heating, and a stirring rotary speed of the reactor was set to 400 rpm; the pH of the first base solution in the reactor was regulated to 11.80 using NaOH, and an ammonia value was 4.5 g/L; and a first co-precipitation reaction was performed to prepare a crystal nucleus, and was stopped until the particle size D₅₀ of the crystal nucleus was 6.0 µm, which took approximately 40 h.

20 kg of the crystal nucleus, 350 L of water, and 9.5 L of the complexing agent solution were added to the reactor to prepare a second base solution, the nitrogen was introduced for replacement, stirring is started, a constant temperature of 70 °C was maintained after heating, and the stirring rotary speed of the reactor was set to 360 rpm; the pH of the second base solution was X, an ammonia value was Y, and the pH value and ammonia value of the second base solution were regulated to cause X and Y to meet: Y=5X-49.5, X was 10.30, and Y was 2.0 g/L.

40 L/h of the metal salt solution, 3.3 L/h of the complexing agent solution, 22.4 L/h of the precipitation agent solution, and the nitrogen were introduced into the second base solution; a second co-precipitation reaction was performed and stopped until the particle size D₅₀ of the material was 19.50 µm, which took approximately 41 h at about 70°C, so as to obtain a pre-product; aging, washing, drying, sieving, and iron removal were performed sequentially on the pre-product, so as to obtain a high-nickel ternary precursor.

### Comparative example 1

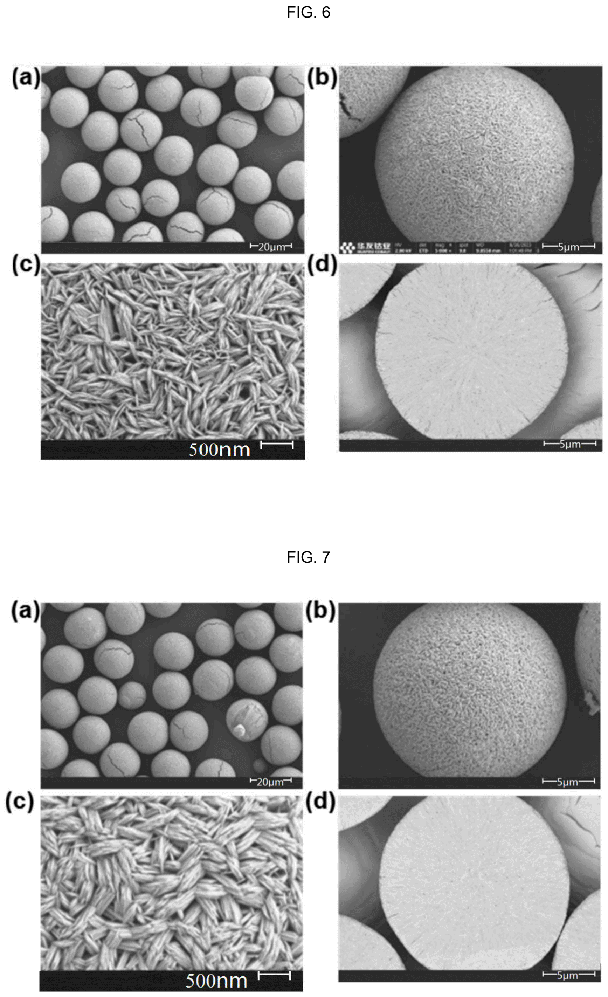

Comparative example 1 was performed by referring to Example 1. A difference between this comparative example and Example 1 lied in that, the temperature of the first base solution was 55 °C, the pH of the second base solution was 10.80, and the ammonia value was 5.5 g/L. SEM characterization was performed on the prepared high-nickel ternary precursor. Results were shown in FIG. 6, from FIG. 6, it might be seen that, since the pH and ammonia value of the second base solution in Comparative example 1 did not meet the following conditions: Y=k×X-b, k was 4.7-5.3, and b was 49-50, the crystal whiskers of the primary particles of the high-nickel ternary precursor were disorderly arranged, the crystal whiskers were poor in consistency and different in size, and the outer surface of the secondary particles had significant cracks.

### Comparative example 2

Comparative example 2 was performed by referring to Example 1. A difference between this comparative example and Example 1 lied in that, the temperature of the first base solution was 55 °C, the pH of the second base solution was 10.50, and the ammonia value was 4.2 g/L. SEM characterization was performed on the prepared high-nickel ternary precursor. Results were shown in FIG. 7, from FIG. 7, it might be seen that, since the pH and ammonia value of the second base solution in Comparative example 2 did not meet the following conditions: Y=k×X-b, k was 4.7-5.3, and b was 49-50, the crystal whiskers of the primary particles of the high-nickel ternary precursor were disorderly arranged, the crystal whiskers were poor in consistency and different in size, and the outer surface of the secondary particles had significant cracks.

### Test example 1

Average distance between crystal whiskers, radius of the core, thickness of the intermediate layer, thickness of the outer layer, degree of sphericity and D₅₀ of the high-nickel ternary precursors prepared in aforementioned Examples and Comparative examples were tested. Specific test methods were shown below, and test results were shown in Table 1.

Half-peak widths of (001) crystal planes, half-peak widths of (101) crystal planes, specific surface areas, and tap densities of the high-nickel ternary precursors prepared in aforementioned Examples and Comparative examples were tested. Specific test methods were shown below, and test results were shown in Table 2.

The high-nickel ternary precursors prepared in aforementioned Examples and Comparative examples were further prepared into a high-nickel ternary layered material, and the cycling stability and electrochemical performance of the high-nickel ternary layered material were tested. A preparation method and test method were shown below, and test results were shown in Table 3.

Half-peak widths of (001) and (101) crystal planes: X-ray diffractometer.

Specific Surface Area (SSA): measured using a low-temperature nitrogen adsorption method.

Tap density: BT-303 tap density instrument.

Average distance between crystal whiskers: the high-nickel ternary precursor particles were sectioned and observed using a scanning electron microscope (SEM). The resolution of the SEM was adjusted to visualize crystal whiskers. Five SEM images were selected, and the distances between adjacent crystal whiskers in various regions of each image were measured. 30 sets were analyzed in each SEM image, and the mean of these measurements was calculated, and were respectively defined as follows: the average distance between the crystal whiskers in the core (a), the average distance between the crystal whiskers in the intermediate layer (b), and the average distance between the crystal whiskers in the outer layer (c).

Radius of the core, thickness of the intermediate layer and thickness of the outer layer: the high-nickel ternary precursor particles were cut and cross-sections were observed under the SEM. It was visible that the high-nickel ternary precursor exhibited distinct regions, proceeding from the inside out: a loose and porous area, a dense area, and a loose and porous area, respectively. A clear boundary was observed between these regions. The central loose and porous area was defined as the core, the dense area as the intermediate layer, and the outer loose and porous area as the outer layer. The ratio of the radius of the core, the thickness of the intermediate layer, and the thickness of the outer layer were respectively determined.

Degree of sphericity: the high-nickel ternary precursor particles were cut and cross-sections were observed under the SEM. Five SEM images were selected, and 30 sample particles were analyzed on each image. The aspect ratio (the ratio of the width to the length) of each particle was calculated. The mean of these ratios was calculated and defined as the degree of sphericity of the particles.

D₅₀: also known as the median particle size, was the size at which 50% of the particles in the high-nickel ternary precursor were smaller than or equal to this value, while 50% of the particles were larger. D₅₀ was measured using a Malvern laser particle size analysis instrument, and the average of three measurements was taken as the final result.

A method for preparing the high-nickel ternary layered material: in an agate mortar, the high-nickel ternary precursor was mixed with LiOH·H₂O at a weight ratio of 1:1.05. The materials were ground and mixed thoroughly in the mortar, and this operation was conducted in an argon-filled glove box. Subsequently, the mixture was placed in a tube furnace and heated to 800°C to perform solid-state sintering for 9 h, to obtain the high-nickel ternary layered material.

A method for preparing the positive electrode plate and lithium-ion battery: the high-nickel ternary layered material, conductive agent (Super P), and binder (PVDF) were mixed in a mass ratio of 90:5:5 to prepare the positive electrode material slurry using a defoaming machine. After adjusting the solid content of the slurry to 39% using N-methylpyrrolidone (NMP), the modified slurry was applied to an aluminum foil using an automatic coating machine. The material was then dried in a vacuum oven at 120°C, rolled by a roll press, and punched into slices in the glove box. The assembly of coin-type 2032 batteries was conducted, with metal lithium sheets as the counter electrodes and polyethylene (PE) separators as the membranes. The electrolyte was 1.2 mol/L LiPF₆, with a solvent ratio of EC:PC:EMC = 1:1:1 (v:v:v), and 2 wt% FEC was added.

Cycling stability: capacity retention rate after 30 cycles: measured using a testing system from Wuhan Land Electronics Co., Ltd, at a current rate of 0.1C, within a voltage range of 3.0 V to 4.2 V.

Button battery capacity pergram: first discharging capacity: measured using a testing system from Wuhan Land Electronics Co., Ltd, at a current rate of 0.1C, within a voltage range of 3.0 V to 4.2 V.

Initial coulombic efficiency: first discharging capacity/first charging capacity×100%.

**Table 1**

| / | a | b | c | radius of the core | thickness of the intermediate layer | thickness of the outer layer | D50 | degree of sphericity |
|---|---|---|---|---|---|---|---|---|
| | nm | nm | nm | µm | µm | µm | µm | % |
| Example 1 | 121.1 | 110.2 | 125.4 | 2.65 | 6.2 | 8.0 | 19.50 | 0.990 |
| Example 2 | 121.1 | 96.4 | 107.1 | 2.65 | 6.2 | 8.0 | 19.50 | 0.991 |
| Example 3 | 121.1 | 90.6 | 101.6 | 2.65 | 6.2 | 8.0 | 19.50 | 0.989 |
| Example 4 | 121.1 | 85.7 | 98.4 | 2.65 | 4.5 | 7.2 | 17.00 | 0.983 |
| Example 5 | 115.3 | 92.4 | 130.6 | 3.00 | 4.2 | 7.3 | 17.50 | 0.986 |
| Example 6 | 127.6 | 88.6 | 114.2 | 2.00 | 5.0 | 7.0 | 16.00 | 0.980 |
| Example 7 | 115.3 | 83.6 | 118.6 | 3.00 | 6.2 | 7.3 | 19.50 | 0.990 |
| Comparative example 1 | 121.1 | 62.1 | 50.7 | 2.65 | 6.2 | 8.0 | 19.50 | 0.984 |
| Comparative example 2 | 121.1 | 80.3 | 77.5 | 2.65 | 6.2 | 8.0 | 19.50 | 0.986 |

**Table 2**

| / | Half-peak width of (001) crystal plane | Half-peak width of (101) crystal plane | Specific surface area | Tap density |
|---|---|---|---|---|
| | | | (m²/g) | (g/cm³) |
| Example 1 | 0.44 | 0.471 | 12.41 | 1.93 |
| Example 2 | 0.435 | 0.474 | 8.63 | 1.87 |
| Example 3 | 0.498 | 0.489 | 12.78 | 1.93 |
| Example 4 | 0.461 | 0.532 | 15.77 | 1.89 |
| Example 5 | 0.451 | 0.482 | 13.42 | 1.91 |
| Example 6 | 0.471 | 0.512 | 12.89 | 1.92 |
| Example 7 | 0.482 | 0.507 | 10.61 | 1.95 |
| Comparative example 1 | 0.573 | 0.556 | 13.22 | 2.02 |
| Comparative example 2 | 0.552 | 0.542 | 8.05 | 2.01 |

**Table 3**

| / | Cycling stability (%) | Button battery capacity pergram (mAh·g⁻¹) | Initial coulombic efficiency (%) |
|---|---|---|---|
| Example 1 | 90.8 | 210.6 | 89.4 |
| Example 2 | 91.2 | 211.5 | 89.9 |
| Example 3 | 90.4 | 210.2 | 89.2 |
| Example 4 | 90.2 | 209.8 | 88.8 |
| Example 5 | 89.9 | 208.7 | 88.6 |
| Example 6 | 88.2 | 208.1 | 88.1 |
| Example 7 | 87.6 | 207.4 | 87.8 |
| Comparative example 1 | 82.6 | 205.1 | 85.7 |
| Comparative example 2 | 82.1 | 203.4 | 85.1 |

From data in Tables 1-3 and FIGs 1-7, it may be learned that, with the same main content and D₅₀ greater than 17.0 µm, the cracking of the high-nickel ternary precursor was related to the half-peak width of the (001) crystal plane. When the half-peak width value of the (001) crystal plane was less than 0.5, there was no cracking in the high-nickel ternary precursor; and when the half-peak width value of the (001) crystal plane was greater than 0.55, the high-nickel ternary precursor showed significant cracking. In combination with Table 1, FIG. 1, FIG. 5, and FIG. 6, it might be learned that, if the numerical value of the half-peak width of the (001) crystal plane was greater, the number of cracking balls of the secondary particles was increased, significantly deepening the corresponding cracks. In combination with Table 1, FIG. 4, FIG. 5, and FIG. 6, it might be learned that, the half-peak width of the (101) crystal plane in Example 4 was significantly greater than that in Example 1, Example 2, and Example 3, which was close to Comparative example 2, thus indicating that the half-peak width of the (101) crystal plane could not be used for evaluating the cracking of the high-nickel ternary precursor.

## Claims

1. A high-nickel ternary precursor, wherein the high-nickel ternary precursor is a secondary particle formed by crystal whiskers, and the secondary particle comprises a core, an intermediate layer, and an outer layer, which are sequentially arranged in a direction from a center to an outer surface; and an average distance between the crystal whiskers in the core is a, an average distance between the crystal whiskers in the intermediate layer is b, and an average distance between the crystal whiskers in the outer layer is c, wherein a, b, and c meet the following conditions: b is less than a, and b is less than c.

2. The high-nickel ternary precursor according to claim 1, wherein the high-nickel ternary precursor meets at least one of the following conditions:
(1) a ratio of a radius of the core to a thickness of the intermediate layer is 1:1.33-1:2.66;
(2) a ratio of the radius of the core to a thickness of the outer layer is 1:2.33-1:4.33;
(3) 110nm≤a≤130 nm;
(4) 80 nm≤b≤115 nm;
(5) 90 nm≤c≤140 nm;
(6) 10 nm≤a-b≤42 nm;
(7) 10 nm≤c-b≤40 nm.

3. The high-nickel ternary precursor according to claim 2, wherein the high-nickel ternary precursor meets at least one of the following conditions:
(1) the D₅₀ of the high-nickel ternary precursor is 15 µm-20 µm;
(2) a radius of the core is 1.5 µm-3.5 µm;
(3) a thickness of the intermediate layer is 4 µm-8 µm; or
(4) a thickness of the outer layer is 7 µm-13 µm.

4. The high-nickel ternary precursor according to claim 1, wherein a half-peak width of a (001) crystal plane of the high-nickel ternary precursor is less than or equal to 0.5.

5. The high-nickel ternary precursor according to any one of claims 1 to 4, wherein a molecular formula of the high-nickel ternary precursor is NiₓCo_{y}Mn_{z}M_{w}(OH)₂, wherein M represents a doped metal element, 0.8 ≤ x < 0.95, 0.01 < y ≤ 0.1, 0.01 < z≤ 0.15, w ≤ 0.01, and x+y+z+w=1.

6. The high-nickel ternary precursor according to any one of claims 1 to 4, wherein the high-nickel ternary precursor meets at least one of the following conditions:
(1) the high-nickel ternary precursor is spherical in shape, and a degree of sphericity of the high-nickel ternary precursor is greater than or equal to 98%;
(2) a tap density of the high-nickel ternary precursor is 1.85 g/cm³-2.05 g/cm³; or
(3) a specific surface area of the high-nickel ternary precursor is 8.0 m²/g-18.0 m²/g.

7. A method for preparing the high-nickel ternary precursor according to any one of claims 1 to 6, comprising the following steps:
adding a metal salt solution, a complexing agent solution, and a precipitation agent solution to a first base solution to perform a first co-precipitation reaction, so as to obtain a crystal nucleus, wherein the first base solution comprises a complexing agent and a precipitation agent;
mixing the crystal nucleus, the complexing agent solution, the precipitation agent solution, and a solvent to obtain a second base solution; and
adding the metal salt solution, the complexing agent solution, and the precipitation agent solution to the second base solution to perform a second co-precipitation reaction, so as to obtain a pre-product, and performing aftertreatment on the pre-product to obtain a high-nickel ternary precursor, wherein in the step of performing the second co-precipitation reaction, the pH of the second base solution is X, an ammonia value of the second base solution is Y, and X and Y meet the following conditions: Y=k×X-b, k is 4.7-5.3, and b is 49-50.

8. The method for preparing the high-nickel ternary precursor according to claim 7, wherein X=10-11, and Y=1.5 g/L-6.5 g/L; preferably, X=10.00-10.80, and Y=1.5 g/L-5.0 g/L.

9. The method for preparing the high-nickel ternary precursor according to claim 7 or 8, wherein the step of adding the metal salt solution, the complexing agent solution, and the precipitation agent solution to the first base solution to perform the first co-precipitation reaction meets at least one of the following conditions:
(1) the metal salt solution comprises a nickel salt, a cobalt salt, and a manganese salt;
(2) the precipitation agent solution comprises at least one of NaOH, KOH, Na₂CO₃, or NaHCO₃;
(3) the complexing agent solution comprises at least one of ammonia water, ammonia carbonate, or ammonium bicarbonate;
(4) a flow rate of the metal salt solution is 10 L/h-35 L/h, and/or an ammonia value of the first base solution is 1.7-5.0 g/L, and/or an ammonia value of the first base solution is 2.0-5.0 g/L, and a pH of the first base solution is 11.10-11.90;
(5) a concentration of the metal salt solution is 60-150 g/L, a mass concentration of the precipitation agent is 20%-35%, and a mass concentration of the complexing agent is 5%-15%;
(6) a temperature for the first co-precipitation reaction is 50 °C-60 °C, and a time for the first co-precipitation reaction is 30 h-40 h; or
(7) the D₅₀ of the crystal nucleus is 4 µm-6 µm;
(8) the precipitation agent solution is selected from a sodium hydroxide aqueous solution with a mass fraction of 20%-35%;
(9) the complexing agent solution is selected from an ammonia water solution with a mass fraction of 5%-15%;
(10) the metal salt solution comprises a nickel salt, a cobalt salt, and a manganese salt; the nickel salt is selected from nickel carbonate, nickel nitrate, nickel sulfate, or nickel halide, the cobalt salt is selected from cobalt carbonate, cobalt nitrate, cobalt sulfate, or cobalt halide, and the manganese salt is selected from manganese carbonate, manganese nitrate, manganese sulfate, or manganese halide.

10. The method for preparing the high-nickel ternary precursor according to claim 7 or 8, wherein the second base solution meets at least one of the following conditions:
(1) an addition amount of the crystal nucleus in the second base solution is 10 kg-20 kg, an ammonia value of the second base solution is 1.5 g/L-5.0 g/L, and a pH of the second base solution is 10.00-10.80;
(2) the precipitation agent solution comprises at least one of NaOH, KOH, Na₂CO₃, or NaHCO₃; or
(3) the complexing agent solution comprises at least one of ammonia water, ammonia carbonate, or ammonium bicarbonate.

11. The method for preparing the high-nickel ternary precursor according to claim 7 or 8, wherein the step of adding the metal salt solution, the complexing agent solution, and the precipitation agent solution to the second base solution to perform the second co-precipitation reaction meets at least one of the following conditions:
(1) the metal salt solution comprises a nickel salt, a cobalt salt, and a manganese salt;
(2) the precipitation agent solution comprises at least one of NaOH, KOH, Na₂CO₃, or NaHCO₃;
(3) the complexing agent solution comprises at least one of ammonia water, ammonia carbonate, or ammonium bicarbonate;
(4) a flow rate of the metal salt solution is 15 L/h-40 L/h, an ammonia value of the second base solution is 1.5 g/L-5.0 g/L, and a pH of the second base solution is 10.00-10.80; or
(5) a temperature for the second co-precipitation reaction is 50 °C-70 °C, and a time for the second co-precipitation reaction is 40 h-70 h.

12. A high-nickel ternary layered material, wherein its raw material comprises the high-nickel ternary precursor according to any one of claims 1 to 6.

13. A method for preparing the high-nickel ternary layered material according to claim 12, comprising the following step:
providing the high-nickel ternary precursor according to any one of claims 1 to 6, and mixing the high-nickel ternary precursor with a lithium source in proportion to perform solid-phase sintering, so as to obtain the high-nickel ternary layered material.

14. A positive electrode plate, comprising the high-nickel ternary layered material according to claim 12.

15. A lithium-ion battery, comprising the positive electrode plate according to claim 14.
